Europäisches Patentamt

European Patent Office

Office européen des brevets

(11) Publication number: **0 004 178**
A1

# EUROPEAN PATENT APPLICATION

(21) Application number: 79300338.5

(22) Date of filing: 06.03.79

(51) Int. Cl.²: **A 01 K 93/00**

(30) Priority: 06.03.78 GB 879278

(43) Date of publication of application:
19.09.79 Bulletin 79/19

(84) Designated contracting states:
BE CH DE FR GB IT LU NL SE

(71) Applicant: I. & C. Carbonite Limited.
132 Upton Road
Bexleyheath Kent DA6 8LX(GB)

(72) Inventor: Iline, Philip John
24 Barfield Road Bickley
Bromley Kent(GB)

(72) Inventor: Carroll, James Peter
132 Upton Road
Bexleyheath Kent DA6 8LX(GB)

(74) Representative: Seaborn, George Stephen et al.
c/o Edward Evans & Co. Chancery House 53-64
Chancery Lane
London WC2A 1SD(GB)

(54) **Fishing floats.**

(57) A fishing float comprises a buoyancy member (1) formed of two shells (4,5) watertightly fitted together, each shell having a blind bore extending inwardly from the exterior, the bores opening in opposite directions. A stem (2) provided with a removably engageable tip member (11) is engageable in one of the bores, and a leg (3) provided with a removably engageable end member (21) providing an eye (16) for a fishing line is engageable in the other bore. One or more marking rings (14,15) are located between the stem and the tip member.

EP 0 004 178 A1

FIG.2.

Croydon Printing Company Ltd.

"Fishing Floats"

## FIELD OF THE INVENTION

The present invention relates to fishing floats.

## BACKGROUND OF THE INVENTION

Conventional fishing floats comprise a quill, usually a peacock quill, which passes through a bore in a buoyancy member (or buoyancy bead), made of cork or balsa wood, which is held fast on the quill, the quill forming a stem above the buoyancy member and a leg below the buoyancy member. A resilient ring encircles and grips the quill and a wire eye is provided at one end of the quill. In use a fishing line is passed through the eye and through the ring, the ring gripping the line and preventing the float moving along the line, the line being weighted beneath the eye so that the float floats in water with the quill held vertical or at a desired inclination to the vertical.

It is often desired to change the inclination of the float being used or the degree of immersion of the float (i.e. the length of the quill above the water surface) in accordance with prevailing fishing conditions or a change in fishing technique. This, however, can only be done by changing the float being used for another float of different buoyancy to the original float. This is because it is not possible to readily alter the buoyancy of any individual float by changing the buoyancy member because the buoyancy member is held irreplaceably fixed on the quill by means of adhesive. The buoyancy member is necessarily held fixed on the quill by means of adhesive because quills vary in diameter and therefore in manufacturing fishing floats, standardized buoyancy members cannot be tightly frictionally fitted on all the quills to be used or even a large proportion of the quills to be used so as to allow removal and replacement of the buoyancy members.

The tip of the float (i.e. the upper end portion of the quill) is usually brightly coloured or marked to render it clearly visible and depending on conditions it may be necessary to change the float for another with a different coloured or differently marked tip more clearly visible than the tip of the first float.

To replace the float, the fishing line must be unthreaded through the eye and threaded through the eye on the replacement float. This is time consuming and inconvenient.

Also in the manufacture of conventional floats, considerable expense is incurred in shaping the buoyancy member and painting and varnishing the float.

· BRIEF DESCRIPTION OF THE INVENTION

In floats according to the present invention, the quill of conventional floats is replaced by a stem and a leg which are separate from each other and are independently attachable to and detachable from the buoyancy member.

The present invention, in its preferred embodiments, provides fishing floats, wherein:-

the buoyancy member can be replaced as desired,

the stem can be replaced as desired,

the fishing line can be left threaded through the eye while the buoyancy member and/or the stem are replaced,

the tip portion of the stem and/or coloured markings on

the stem can be replaced as desired,

the buoyancy member can be manufactured more cheaply than conventional cork or balsa buoyancy members,

the components of the float can be formed, e.g. by moulding, in the desired colours and of water resistant material thereby rendering painting and varnishing unnecessary.

In accordance with a first aspect of the present invention, there is provided a buoyancy bead for a fishing float, the buoyancy bead comprising two hollow shells adapted to be watertightly fitted together, each shell having a blind bore extending inwardly from the exterior of the shell, the blind bores opening in opposite directions when the shells are fitted together, one bore being for removable engagement therein of a stem and the other bore being for removable engagement therein of a leg providing an eye for a fishing line.

In accordance with a second aspect of the present invention there is provided a fishing float comprising a hollow buoyancy bead formed of two shells watertighly fitted together, each shell having a blind bore extending inwardly from the exterior of the bead, the bores opening in opposite directions, a stem removably engageable in one of the bores, and a leg providing an eye for a fishing line being removably engageable in the other bore.

According to a third aspect of the invention, there is provided a stem for a float, the stem comprising a body member and a tip member, one member having a bore formed therein and the other member having a spigot and presenting a stop adjacent the spigot, the stem further comprising one or more marking rings, the rings being
locatable around the spigot and the spigot being removably
engageable in the bore of said one member to hold the
one or more rings between the stop and said other member.

BRIEF DESCRIPTION OF THE DRAWINGS
The invention is further described below by way of
example with reference to the accompanying drawings,
wherein:

Figure 1 is an exploded view of a float according to
the invention, showing the component parts of the float;

Figure 2 is a view of the float of Figure 1, the float
being shown assembled;

Figure 3 is a longitudinal sectional view through the
buoyancy bead of the float, the bead being shown
unassembled; and

Figure 4 is a longitudinal view, partly in section, of
the upper portion of the stem of another float according
to the invention.

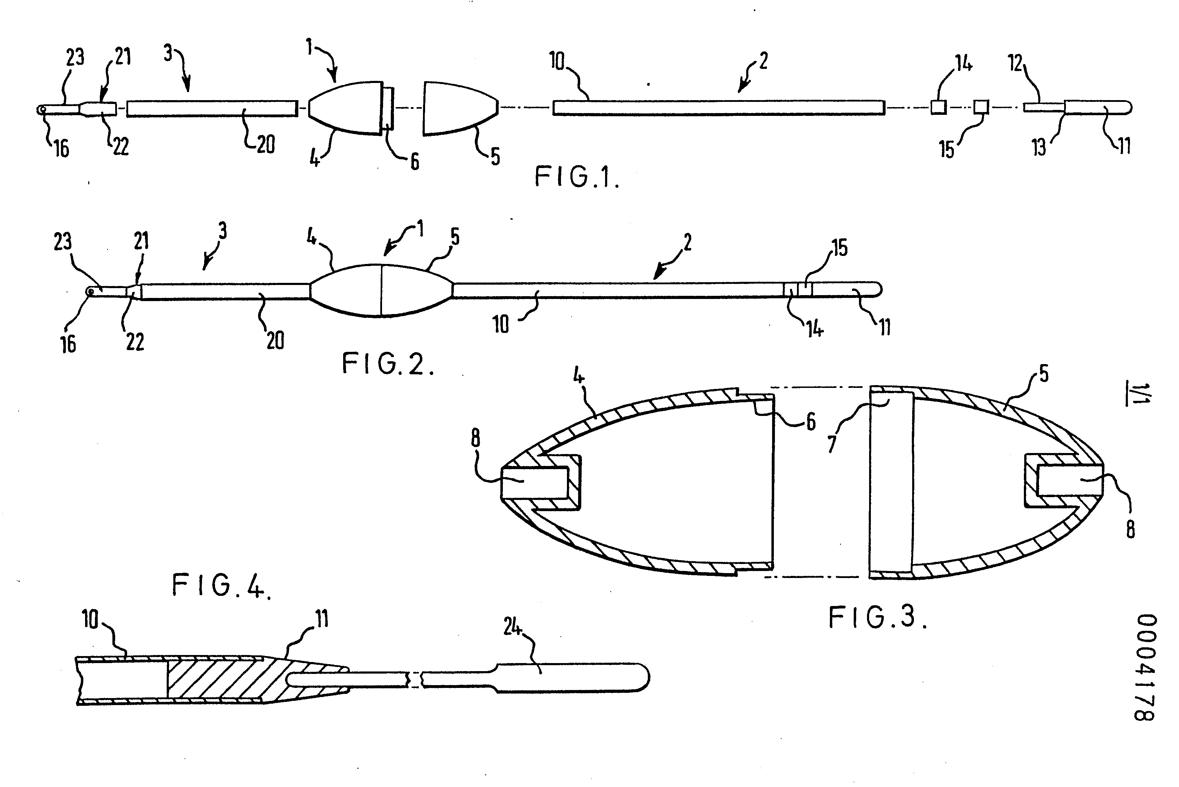

DETAILED DESCRIPTION OF THE INVENTION
Referring to Figures 1 and 2, a float comprises a
buoyancy bead 1, a stem 2 and a leg 3.

The buoyancy bead is hollow and consists of two shells
4 and 5. The shell 4 is formed with a rim portion 6
having an external rebate and the shell 5 is formed
with a rim portion 7 having an internal rebate. The
rim portion of the shell 4 is engaged in the rim
portion 5 of the shell to form a watertight join between
the shells and to form an air chamber within the bead.
Friction between the internal and external rebates is normally sufficient to hold the shells together but a small amount of adhesive may also be used to hold the shells together.

The shells 4 and 5 are formed with respective blind bores 8 and 8', the blind bores being coaxial in the assembled buoyancy bead.

The stem 2 comprises a main body portion in the form of a tubular member 10 and a tip member 11. The tip member 11 has a reduced diameter portion or spigot 12 and a shoulder 13 (forming a stop) adjacent the spigot. The spigot 12 is frictionally engageable within the bore of the main body portion 9.

The stem 2 further comprises marking rings, two of which, numbered 14 and 15, are shown. These rings can be located on the spigot 12 so as to encircle the spigot and the spigot can then be frictionally engaged in the bore of the main body member 10 to assemble the stem 2.

The main body portion 20 of the stem, the tip member 11 and especially the marking rings may be of different colours.

The leg 3 comprises a tubular member 20 which is frictionally engageable in the bore of the tubular member 20 and a member 21.

The member 21 has a portion 22 frictionally engageable in the bore of the tubular member 20 and a portion 23 of reduced diameter and provided with an eye 16. Preferably the portion 23 has a slight taper towards its free end to enhance its frictional engagement in the bore 8.

0004178

A modification of the tip member 11 is shown in Figure 4. In this modification the tip member is provided with a bore for receiving an antenna 24 which/is frictionally engaged in the bore and can be replaced as desired.

It is envisaged that an angler will equip himself with a selection of interchangeable buoyancy beads, tubular members, tip members and marking rings similar to those described above (each such component is given the same reference numeral below as the corresponding part shown in the drawings). Thus by suitably selecting these components the angler can assemble a float having desired characteristics to suit the fishing conditions and the fishing technique to be used.

In particular the buoyancy bead 1 can be selected to impart the desired buoyancy to the float, which thus determines how much of the stem is submerged, and the colour and number of any marking rings used and the colour of the tip and the colour of the antenna, if used, can be selected to make the float easily visible.

It is possible to assemble a float without a buoyancy bead, the float comprising a member 21 inserted into one end of a tubular member 10 and a tip member 11, optionally provided with one or more marking rings, inserted into the other end of the stem. The stem being hollow provides the float thus assembled with buoyancy.

It is also possible to assemble the float with the buoyancy bead 1 but without the tubular member 20, the portion 22 of the member 21 being inserted directly into the bore 8 of the buoyancy bead, the member 21 alone thus constituting the leg.

If desired the tubular member 3 may be held by means of adhesive in the bore 8 of the buoyancy bead. Similarly the portion 22 of the member 21 may be held by means of adhesive in the bore of the tubular member 20 or the bore 8 of the buoyancy bead. Similarly the portion 22 of the member 21 may be held by means of adhesive in the bore of the tubular member 20 or the bore 8 of the buoyancy bead. Similarly the member 10 of the stem 2 may be held by means of adhesive in the bore 8' and the tip member 13 may be held by means of adhesive in the member 10 of the stem.

The shells 4 and 5 of the buoyancy bead may be injection moulded of polypropylene. The tip 11 may be injection moulded of polystyrene. The rings, e.g. rings 14 and 15, may be made of rigid PVC (polyvinyl chloride). The leg 3 may be made of ABS (acrilonitrile/butadiene/styrene copolymer).

0004178

- 8 -

## CLAIMS

1.  A buoyancy member for a fishing float characterized in that it comprises two hollow shells (4,5) adapted to be watertightly fitted together, each shell having a blind bore (8,8') extending inwardly from the exterior of the shell, the blind bores opening in opposite directions when the shells are fitted together, one bore being for removable engagement therein of a stem (10) and the other bore being for removable engagement therein of a leg (20) providing an eye (16) for a fishing line.

2.  A fishing float characterized in that it comprises a hollow buoyancy member (1) formed of two shells (4,5) watertightly fitted together, each shell having a blind bore (8,8') extending inwardly from the exterior of the buoyancy member, the bores opening in opposite directions, a stem (10) removably engageable in one of the bores and a leg (3) providing an eye (16) for a fishing line being removably engageable in the other bore.

3.  A float according to claim 2, characterised in that the stem (10) comprises a body member (10) and a tip member(11), one of the members having a bore formed therein and the other member having a spigot (12) and presenting a stop (13) adjacent the spigot, the stem further comprising one or more marking rings (14,15), the one or more rings being locatable around the spigot and the spigot being removably engageable in the bore of said one member to hold the one or more marking rings between the stop and said other member.

4.    A float according to claim 2 or 3, characterized in that the stem comprises a body portion (10,11) and an antenna (24) removably engageable with the body portion.

5.·   A float according to claim 2,3 or 4, characterized in that the leg (3) comprises a body member (20) and an end member (21), one of the members having a bore formed therein and the other member having  a portion (22) removably engageable in the bore, the end member having a portion (23) provided with said eye (16).

6.    A fishing float characterized in that it comprises a tubular stem member (10), a tip member having a spigot (12) and presenting a stop (13) adjacent the spigot, one or more marking rings (14,15), the one or more marking rings being locatable around the spigot and the spigot being removably engageable in one end of the bore of the tubular stem member to hold the one or more marking rings between the stop and the stem  member, and a member (21) having a portion (22) removably engageable in the other end of the bore of  tubular stem member and a portion (23) provided with an eye (16) for a fishing line.

FIG.1.

FIG.2.

FIG.4.

FIG.3.

1/1

0004178

0004178

**European Patent Office**

## EUROPEAN SEARCH REPORT

Application number

EP 79 30 0338

| DOCUMENTS CONSIDERED TO BE RELEVANT | | | CLASSIFICATION OF THE APPLICATION (Int. Cl.²) |
|---|---|---|---|
| Category | Citation of document with indication, where appropriate, of relevant passages | Relevant to claim | |
| | US - A - 3 204 363 (DUNHAM) <br> * Column 2, lines 5-29, 57-72; column 3, lines 1-40 * <br><br> -- | 1-3 | A 01 K 93/00 |
| | US - A - 1 362 781 (CHASE) <br> * Page 1, lines 37-72 * <br><br> -- | 1,2 | |
| A | US - A - 3 056 229 (HANEY) <br> * Column 1, lines 8-50 * <br><br> -- | 1 | |
| | FR - A - 1 201 632 (BOUILLARD) <br> * Page 2, abstract * <br><br> -- | 5 | **TECHNICAL FIELDS SEARCHED (Int.Cl.²)** <br><br> A 01 K |
| | FR - A - 2 204 350 (DOCQUOY) <br> * Page 2, lines 12-13 * <br><br> -- | 4 | |
| | US - A - 2 775 843 (LEISER) <br> * Column 1, line 49 - column 2, line 9 * <br><br> ---- | 1,2 | |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| | The present search report has been drawn up for all claims | | |
|---|---|---|---|
| Place of search <br> The Hague | Date of completion of the search <br> 06-06-1979 | Examiner <br> CRUCHTEN | |

EPO Form 1503.1  06.78